# EUROPEAN PATENT APPLICATION

(11) **EP 4 751 863 A1**
(43) Date of publication of application: **03.06.2026**
(21) Application number: 24845633.7
(22) Date of filing: 23.07.2024
(51) Int. Cl.: B25J 15/08

(54) **ROBOT HAND**

(30) Priority: 24.07.2023 JP 2023119982
(71) Applicant: Daily Color Inc., Tokyo, 160-0022 (JP)
(72) Inventor: KAMIYA, Yasunori, Tokyo 160-0022 (JP)
(74) Representative: KATZAROV S.A.
(86) International application number: PCT/JP2024/026363
(87) International publication number: WO 2025/023258

(57) **Abstract**

A robot hand (10) includes two or more finger portions (20 and 30) and a forward-rearward movement mechanism (60) that causes at least one finger portion (30) to perform a sliding movement in a forward-rearward direction of the robot hand (10) independently of one or more remaining finger portions (20).

## Description

### [Technical Field]

The present disclosure relates to a robot hand.

### [Background Art]

Grippers that grip objects have been proposed (see Patent Literature (PTL) 1). These grippers can hold and transfer objects.

### [Citation List]

### [Patent Literature]

[PTL 1] Japanese Patent No. 6678648

### [Summary of Invention]

### [Technical Problem]

There is a demand for robot hands that are capable of holding various objects.

In view of the above, the present disclosure has an objective to provide a robot hand that is capable of holding various objects.

### [Solution to Problem]

In order to achieve the above-described objective, a robot hand according to one aspect of the present disclosure is a robot hand including two or more finger portions characterized by including a mechanism that causes, among the two or more finger portions, one or more finger portions to perform a sliding movement in a forward-rearward direction independently of one or more remaining finger portions. The forward-rearward direction is any of the following directions: (1) a direction connecting a distal end of any of the one or more finger portions and a center of gravity of a basal member of the robot hand, the basal member being a portion directly connected to a mechanical apparatus that includes a plurality of parts; (2) a direction parallel to a normal vector of a connection surface that directly connects the mechanical apparatus and the robot hand; (3) a direction connecting, among the plurality of parts included in the mechanical apparatus, a center of gravity of a part that is directly connected to the robot hand and a center of gravity of the robot hand; and (4) a direction along a longest axis of an ellipsoid that approximates an external shape of the robot hand with the one or more finger portions extended.

### [Advantageous Effects of Invention]

According to the present disclosure, a robot hand that is capable of holding various objects is provided.

### [Brief Description of Drawings]

[FIG. 1]

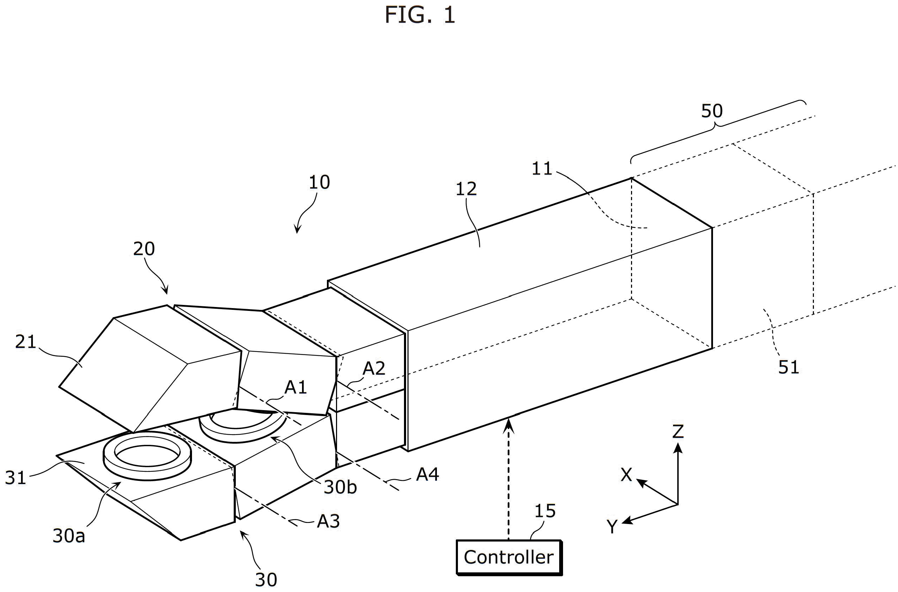

   FIG. 1 is a perspective view of an external appearance of a robot hand according to an embodiment.
[FIG. 2]

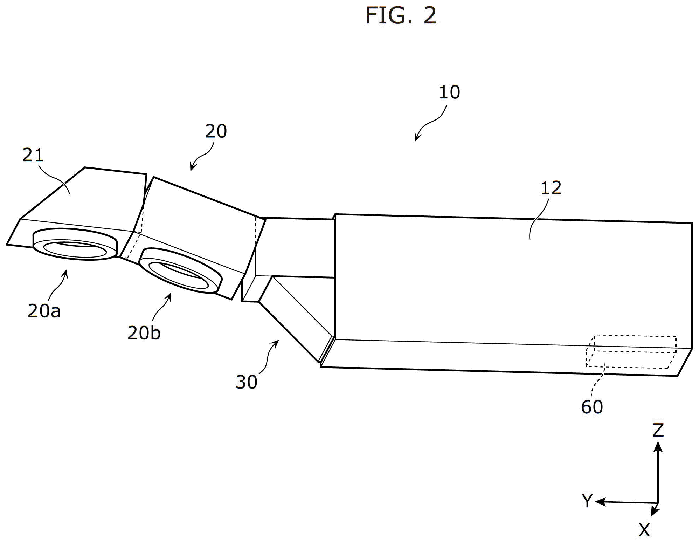

   FIG. 2 is a perspective view of an external appearance of a state in which one finger portion of the robot hand shown in FIG. 1 is moved rearward. Note that the other finger portion is hidden inside a cover.
[FIG. 3]

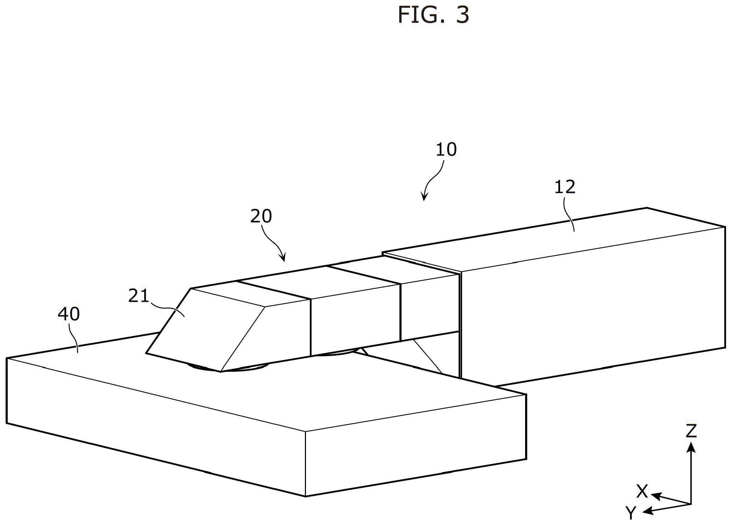

   FIG. 3 is a perspective view of an external appearance of a state in which the robot hand shown in FIG. 1 attempts to hold an object by the one finger portion attracting the upper surface of the object by suction while the other finger portion is moved rearward.
[FIG. 4]

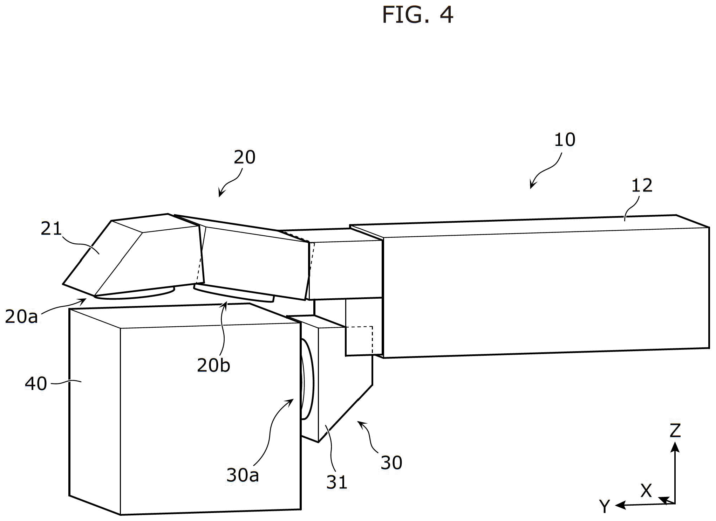

   FIG. 4 is a perspective view of an external appearance of a state in which the robot hand shown in FIG. 1 attempts to hold an object by (i) the one finger portion attracting the upper surface of the object by suction and (ii) the other finger portion changing the angle of the distal end of the finger and attracting a side surface of the object by suction while being moved rearward.

### [Description of Embodiment]

### [Embodiment]

Hereinafter, an embodiment according to the present disclosure will be described in detail with reference to the drawings. Note that the embodiment described below shows a specific example of the present disclosure. The numerical values, shapes, materials, elements, the arrangement and connection of the elements, steps, orders of the steps, etc., presented in the embodiment below are mere examples, and are not intended to limit the present disclosure. Moreover, the drawings do not necessarily provide strictly accurate illustrations. Throughout the drawings, the same reference sign is given to substantially the same element, and redundant description may be omitted or simplified.

### [Perspective View of External Appearance]

FIG. 1 is a perspective view of an external appearance of robot hand 10 according to the embodiment. Robot hand 10 includes finger portions 20 and 30, basal member 12, and controller 15. FIG. 1 shows a state in which the two finger portions 20 and 30 of robot hand 10 are loosely closed. Note that the present diagram also shows mechanical apparatus 50 to which robot hand 10 is attached.

Robot hand 10 is a robot hand capable of grasping and holding objects. For example, robot hand 10 is attached to mechanical apparatus 50. In this case, each of the two finger portions 20 and 30 can be rotated about first pivot axis A1, second pivot axis A2, third pivot axis A3, and fourth pivot axis A4 as necessary to move in the direction toward or away from each other. An object can be held by changing the positional relationship between the finger portions and pinching an object between finger portions 20 and 30. Note that mechanisms (finger-portion drivers) for driving first pivot axis A1, second pivot axis A2, third pivot axis A3, and fourth pivot axis A4 are provided inside the finger portions in the vicinity of the pivot axes (not illustrated). In addition, the shapes of joints about respective pivot axes of the finger portions shown in FIG. 1 are schematically presented, and do not depict precise physical structures.

Note that the finger portions each may be defined as an elongated part including one or more pivot joints. Moreover, the pivot joints may be defined as two or more in number. As the definition for the finger portions, even if the finger portions do not include distinct hinge-like "pivot joints", the finger portions each may also be defined as "an elongated part that has a mechanism for bending the finger portion by deformation of the entire finger portion or of the entirety of a section of the finger portion". For example, the finger portions each may be made of a readily deformable, flexible material and may have a mechanism for bending the finger portion by deformation of the entire finger portion.

The finger portions each may also be defined as an elongated part having some type of driving mechanism. In this case, some type of driving mechanism may include not only pivot joints or a mechanism as the above-described "mechanism for bending the entire finger portion or the entirety of a section of the finger portion" but a driving mechanism for extending and contracting the finger portion. The above-described some type of driving mechanism may also include some type of driving mechanism configured as deformation mechanisms.

Note that robot hand 10 according to the present disclosure does not necessarily include joints about the respective pivot axes of the finger portions shown in FIG. 1. Similarly, robot hand 10 according to the present disclosure does not necessarily include controller 15 shown in FIG. 1.

Robot hand 10 is capable of holding an object by causing the object to adhere to the robot hand by suction. For example, robot hand 10 is attached to mechanical apparatus 50 in a similar manner.

Moreover, robot hand 10 includes a forward-rearward movement mechanism 60 that causes finger portion 30 to move rearward (the negative direction in the y direction) or forward (the positive direction in the y direction) (see FIG. 2). Note that the y-axis indicates the forward-rearward direction defined in the present description, the x-axis indicates the direction orthogonal to the y-axis, and the z-axis indicates the direction orthogonal to the x-axis and y-axis.

Controller 15 controls robot hand 10. Controller 15 includes memory that stores programs and information pertaining to objects, a processor that executes the programs, and a camera or the like as object detection means for detecting the conditions of the objects to be held. Controller 15 is accommodated in mechanical apparatus 50 or the like. Note that FIG. 1 functionally illustrates controller 15.

FIG. 2 is a perspective view of an external appearance of a state in which one finger (here, finger portion 30) of robot hand 10 according to the embodiment is moved rearward (the negative direction in the y direction) by forward-rearward movement mechanism 60 under the control of controller 15. Note that FIG. 2 omits illustrations of mechanical apparatus 50 and controller 15 shown in FIG. 1. The same applies to the subsequent diagrams.

### [Movement in Forward-Rearward Direction]

Here, the movement in the forward-rearward direction may mean (i) the ability to change the relative positional relationship of a finger or the distal end of the finger relative to basal member 12 of the robot hand or part 51 to which the robot hand is attached in the forward-rearward direction or (ii) the ability to cause the finger portion to perform a sliding movement, such as moving in and out or retracting and extending, in the forward-rearward direction.

### [Description of Forward-Rearward Direction]

The forward-rearward direction may be any of the following directions.

(1) The direction connecting the distal end of any of one or more finger portions and the center of gravity of basal member 12 of robot hand 10 which is the portion directly connected to mechanical apparatus 50 including a plurality of parts;
(2) the direction parallel to the normal vector of connection surface 11 that directly connects mechanical apparatus 50 and robot hand 10;
(3) the direction connecting, among parts included in mechanical apparatus 50, the center of gravity of part 51 that is directly connected to robot hand 10 and the center of gravity of robot hand 10; and
(4) the direction along the longest axis of an ellipsoid that approximates the external shape of robot hand 10 with the one or more finger portions extended or maximally extended.

The forward-rearward direction may also be defined as the direction in which basal member 12 of robot hand 10 extends. The movement of a finger portion in the forward-rearward direction means that the movement vector of the finger portion has a component in the forward-rearward direction (i.e., the y-axis direction). Accordingly, the movement may include not only a movement parallel to the forward-rearward direction but also a movement in a direction that forms an angle of 90° or less relative to the forward-rearward direction.

Note that mechanical apparatus 50 may be a machine called a robot arm. The phrase "directly connected" means connected by physical contact. The term "connected" alone includes not only "directly connected" configurations but also indirectly connected configurations in which objects are connected with another object interposed therebetween.

The distal end of a finger portion means, when the finger portion is regarded as an elongated part, the end point of the finger portion opposite the base of the robot hand.

In FIG. 1, the direction along the longest axis of an ellipsoid that approximates the external shape of robot hand 10 with the one or more finger portions extended or maximally extended is the y-axis direction shown in FIG. 1. Approximating the robot hand as an ellipsoid may also mean approximating, using a least-squares method, the coordinates of the surface shape of the robot hand (e.g., three-dimensional coordinates of all of points obtained by calculating, at 1 mm intervals, three-dimensional coordinate points of the entire surface of the robot hand) by a three-dimensional ellipse (a prolate spheroid or prolate ellipsoid such as a rugby-ball shape). Moreover, the above-described direction (4) may be, when the robot hand is regarded not as a regular shape such as a circle or a square but as a long shape such as a rectangle or an ellipse, the direction obtained by three-dimensionally extending the longitudinal direction of the robot hand.

### [Meaning Included in Movement in Forward-Rearward Direction]

The movement of a finger portion in the forward-rearward direction may be not only a movement perfectly parallel to any of the above-described directions (1) to (4) but a movement including a component of any of the above-described directions (1) to (4). Specifically, for example, the movement of a finger portion in the forward-rearward direction may be a movement in an oblique direction including a component of the movement in the left-right direction in addition to the movement in the forward-rearward direction or may follow a curved path while including a component of a movement parallel to any of the above-described directions (1) to (4). Moreover, for a movement to be regarded as a movement in the forward-rearward direction, the movement may be required to include, as the primary component, any of the above-described directions (1) to (4).

The movement in the forward-rearward direction may be a movement involving a change in the orientation angle of a finger.

### [Suction Port]

A finger portion or at least one of the members included in robot hand 10 other than the finger portions may be provided with a vacuum (vacuum suction) suction port.

In the present embodiment, finger portion 20 includes suction ports 20a and 20b and finger portion 30 includes suction ports 30a and 30b. With this, a pump (not illustrated) or the like draws air from these suction ports under control of controller 15 and the resulting negative pressure attracts an object by suction, thereby allowing the object to be held. As illustrated in FIG. 1, these suction ports may be provided on the inner side surfaces of respective finger portions of robot hand 10. These suction ports may also be provided at the distal ends of the respective finger portions. These suction ports may also be provided on the outer side surfaces of respective finger portions of robot hand 10.

### [When Finger Portion Is Not Itself Suction Port]

It should be noted that when the finger portions include suction ports, the finger portions may be capable of holding an object solely by, without using vacuum suction by the suction ports of the finger portions, physical pinching or pressing using one or more finger portions (i.e., physical pinching or pressing of an object between the finger portions or between a finger portion and a part of the robot hand other than the finger portions) under the control of controller 15. In this case, the finger portions that pinch or press may be finger portions including suction ports or may be other different finger portions.

### [Driver of Finger Portion]

As for the finger portions, the finger portions each may include one or more driving mechanisms as shown in the present embodiment. The driving mechanisms included in respective finger portions may be different from the driving mechanism that causes the finger portions to move in the forward-rearward direction (in other words, these driving mechanisms are not common driving mechanisms; when a single forward-rearward movement mechanism 60 is provided, the finger portions each may be required to include another different driving mechanism).

### [Advantageous Effects of Causing Finger Portion to Move Rearward for Retraction]

Robot hand 10 according to the present embodiment includes the following finger portions that can be moved in the forward-rearward direction: (1) one or more finger portions, (2) two or more finger portions, or (3) one or more finger portions among the two or more finger portions.

Here, the aforementioned item (3) indicating "one or more finger portions among two or more finger portions that can be moved in the forward-rearward direction" means that the one or more finger portions move in the forward-rearward direction independently of the one or more remaining finger portions. In other words, the above-described structure is different from a structure in which all finger portions can be "simultaneously" moved in the forward-rearward direction. This means that the relative positional relationship between the position at which one or more finger portions perform their function (for example, the position at which the finger portions press) and the position at which the one or more remaining finger portions perform their function can be changed in the forward-rearward direction.

With this, a finger portion can be retracted out of the movable range of another finger portion. Furthermore, when work using one or more finger portions A is performed, one or more other finger portions B can be retracted to the positions in which the one or more other finger portions B do not adversely affect (interfere with) the work. With this, work using finger portion A can be readily performed and work that could not be performed without retraction of finger portion B due to the physical interference by finger portion B can be performed.

For example, when the suction ports of one finger portion 20 attract the upper part of an object by suction, forward-rearward movement mechanism 60 is used, in advance, to move the other finger portion 30 rearward for retraction. With this, robot hand 10 can hold the object using the suction ports of the one finger portion 20 without the other finger portion 30 interfering with the object (see FIG. 3 showing an external appearance of a state in which robot hand 10 shown in FIG. 1 attempts to hold object 40 by the one finger portion 20 attracting the upper surface of object 40 by suction while the other finger portion 30 is moved rearward).

This method of holding is also effective even if there are constraints in the environment surrounding objects to be held. For example, when another object is present above an object, the target object can be held by inserting the one finger portion 20 into a gap between the target object and the other object after the other finger portion 30 is retracted rearward.

### [Changeable Finger Angle and Its Advantageous Effects]

It is also conceivable that the angle of distal end portion 31 of finger portion 30 can be changed. By changing the angle of distal end portion 31 of finger portion 30 to cause distal end portion 31 to align with a side surface of an object under the control of controller 15, not only the upper surface of the object can be attracted by suction but also the side surface of the object can be attracted by suction. In other words, two or more suction ports can be aligned with differently oriented surfaces of an object to perform vacuum suction. This may also indicate the ability of two or more suction ports to be aligned not only with a plurality of surfaces of a single object but also with a plurality of surfaces at different angles of one or more or two or more differently shaped objects. In this case, the angle of distal end portion 31 of finger portion 30 may be changed to be aligned with a side surface of an object under the control of controller 15, using shape information that is one of information items stored in the memory included in controller 15 and surface shape information of the object detected by a camera or the like as object detection means such as a camera or the like included in controller 15. The angle of distal end portion 21 of finger portion 20 may be similarly changed.

With this, objects can be more securely held (see FIG. 4 showing an external appearance of a state in which robot hand 10 shown in FIG. 1 attempts to hold object 40 by the one finger portion 20 attracting the upper surface of object 40 by suction and the other finger portion 30 changing the angle of distal end portion 31 of finger portion 30 and attracting a side surface of object 40 by suction while being moved rearward).

Moreover, FIG. 4 shows one example. Specifically, in FIG. 4, the surfaces of distal end portions 21 and 31 are aligned with the surfaces forming a 90-degree corner of the object; however, it is conceivable that the surfaces of distal end portions 21 and 31 align not only with the surfaces forming a 90-degree corner but also with surfaces forming optional angles or curved surfaces by changing the relative angle or relative position of distal end portions 21 and 31.

Moreover, since finger portion 30 can be moved in the forward-rearward direction, the distance or relative positional relationship between the suction ports of finger portion 20 and suction ports of finger portion 30 can be changed, thereby allowing a wider variety of objects to be held.

Furthermore, the suction port of distal end portion 31 shown in FIG. 4 can change positions in the up-down direction by changing angles of the joints about third pivot axis A3 and fourth pivot axis A4. With this, in accordance with a variety of different objects, distal end portion 31 can use the suction port to hold an object at a position at which the suction port aligns with a surface of the object. This adjustment in the up-down direction involves a displacement in the forward-rearward direction, and forward-rearward movement mechanism 60 also effectively works for such adjustment in the forward-rearward direction. Note that the change in position in the up-down direction need not be limited to a change in angles of the joints, and may be a change made by, for example, a sliding movement mechanism that slides in the up-down direction.

### [Forward-Rearward Movement Mechanism Is Sliding Mechanism That Enables Sliding Movement]

As one example of specific examples of forward-rearward movement mechanism 60 that moves a finger portion in the forward-rearward direction, forward-rearward movement mechanism 60 may be implemented as a sliding mechanism including a slide driver which causes the finger portion to perform a sliding movement. As another specific example, forward-rearward movement mechanism 60 may be implemented as a mechanism that causes movement in the forward-rearward direction by rotational drive. Note that the specific examples of forward-rearward movement mechanism 60 may be movement mechanisms other than the above-described movement mechanisms.

For example, forward-rearward movement mechanism 60 may be a sliding mechanism that causes a finger or the distal end of the finger to perform a sliding movement by bending and extending the finger joints.

Forward-rearward movement mechanism 60 may also be a sliding mechanism that causes a finger or the distal end of the finger to perform a sliding movement using a mechanism that lengthens or shortens the finger itself.

Note that the sliding mechanism may be a mechanism including a driving mechanism that actively performs a sliding movement or a mechanism that performs a sliding movement using external power. When a sliding mechanism is the sliding mechanism that performs a sliding movement using external power, the sliding mechanism may include a mechanism capable of fixing the sliding position.

### [Description of Expressions: Retraction of Finger Portion and Space Occupied by Finger Portion]

Forward-rearward movement mechanism 60 may also be a mechanism capable of retracting one or more finger portions, namely keeping the spatial region of the effective ranges of one or more finger portions that are caused to move in forward-rearward direction away from the spatial region of the effective ranges of one or more other optional finger portions (i.e., preventing these two spatial regions from overlapping). Here, the spatial region of the effective range of a finger portion may be defined as a spatial region that can be occupied by the finger portion when the finger portion is moved by a driver included in the finger portion other than forward-rearward movement mechanism 60. In the keeping of the spatial region of the effective range of finger portions away from the spatial region of the effective range of other finger portions, the target spatial region may be a spatial region including not only the spatial region of the effective ranges of respective finger portions but also its surrounding spatial region (i.e., a space as a margin). Here, the spatial region including the surrounding spatial region may be a spatial region outwardly expanded by only a distance from the position of the center of gravity of the spatial region of the effective ranges of finger portions to the boundary position of the spatial region of the effective ranges of the finger portions or by only half the foregoing distance.

Alternatively, in the keeping of the spatial region of the effective range of finger portions away from the spatial region of the effective range of other finger portions, the target spatial region may be a reduced spatial region obtained by reducing the spatial regions of the effective ranges of respective finger portions. The reduced spatial region may be a spatial region whose boundary is inwardly displaced by only one-third the distance from the boundary of the spatial region of the effective ranges of respective finger portions to the position of the center of gravity of the spatial region.

### [Size of Robot Hand]

One or more finger portions having a small thickness (in FIG. 1, the thickness of each finger portion in the z-direction when each finger portion is maximally extended in the y-direction) and a narrow width (x-direction in FIG. 1) are effective when there are very severe constraints in the environment surrounding objects. For example, a combination of a thickness of 70 mm or less and a width of 120 mm or less. As another example, there is a combination of a thickness of 50 mm or less and a width of 100 mm or less. As another example, there is also a combination of a thickness of 40 mm or less and a width of 70 mm or less.

### [Example of Control Performed by Controller]

As described above, controller 15 may perform at least one of the following: (1) control to hold object 40 by vacuum suction using suction ports 20a, 20b, and the like (see FIG. 3 and FIG. 4), (2) control to cause two or more suction ports 20a, 30a, and the like to align with differently oriented surfaces of an object to perform vacuum suction (this may apply to objects of different shape types (see FIG. 4 for an example of an object of one shape type)), and (3) control to hold object 40 solely by physical pinching or pressing using one or more finger portions 20 and 30 without using vacuum suction by suction ports 20a, 20b, and the like.

Hereinbefore, the robot hand according to the present disclosure has been described based on the embodiment and the variations; however, the present disclosure is not limited to these embodiment and variations. The scope of the present disclosure may encompass embodiments as a result of making, to the embodiment and variations, various modifications that may be conceived by those skilled in the art, and different embodiments achieved by combining some elements in the embodiments and variations, as long as the resultant embodiments do not depart from the spirit of the present disclosure.

### [Industrial Applicability]

The robot hand according to the present disclosure can be used as a robot hand capable of holding various objects.

### [Reference Signs List]

| | |
|---|---|
| 10 | robot hand |
| 11 | connection surface connecting robot hand and mechanical apparatus |
| 12 | basal member of robot hand |
| 15 | controller |
| 20,30 | finger portion |
| 20a, 20b, 30a, 30b | suction port |
| 21 | distal end portion of finger portion 20 |
| 31 | distal end portion of finger portion 30 |
| 40 | object |
| 50 | mechanical apparatus |
| 51 | part among parts of mechanical apparatus to which robot hand is directly connected |
| 60 | forward-rearward movement mechanism |
| A1 | first pivot axis |
| A2 | second pivot axis |
| A3 | third pivot axis |
| A4 | fourth pivot axis |

## Claims

1. A robot hand including two or more finger portions, the robot hand comprising:
a mechanism that causes, among the two or more finger portions, one or more finger portions to perform a sliding movement in a forward-rearward direction independently of one or more remaining finger portions, wherein
the forward-rearward direction is any of the following directions:
(1) a direction connecting a distal end of any of the one or more finger portions and a center of gravity of a basal member of the robot hand, the basal member being a portion directly connected to a mechanical apparatus that includes a plurality of parts;
(2) a direction parallel to a normal vector of a connection surface that directly connects the mechanical apparatus and the robot hand;
(3) a direction connecting, among the plurality of parts included in the mechanical apparatus, a center of gravity of a part that is directly connected to the robot hand and a center of gravity of the robot hand; and
(4) a direction along a longest axis of an ellipsoid that approximates an external shape of the robot hand with the one or more finger portions extended.

2. The robot hand according to claim 1, further comprising:
a controller that controls the robot hand, wherein
at least one finger portion among the one or more finger portions includes a suction port, and
the controller performs:
(1) control to hold an object by vacuum suction using the suction port; and
(2) control to cause two or more suction ports to be aligned with differently oriented surfaces of the object to perform vacuum suction, the two or more suction ports each being the suction port.

3. The robot hand according to claim 2, wherein
the controller further performs:
(3) control to hold the object solely by physical pinching or pressing using the one or more finger portions without using the vacuum suction by the suction port of the at least one finger portion.
